# EUROPÄISCHE PATENTANMELDUNG

(11) **EP 0 809 044 A2**
(43) Veröffentlichungstag der Anmeldung: **26.11.1997**
(21) Anmeldenummer: 97108274.8
(22) Anmeldetag: 22.05.1997
(51) Int. Cl.: F16H 37/08

(54) **Stufenloses Getriebe**

(30) Priorität: 25.05.1996 DE 19621200
(71) Anmelder: ZF FRIEDRICHSHAFEN Aktiengesellschaft, 88038 Friedrichshafen (DE)
(72) Erfinder: Arain, Abdul, 94136 Thyrnau (DE); Nikolaus, Heinrich, Prof. Dr.-Ing., 22043 Hamburg (DE)
(74) Vertreter: Zietlow, Karl-Peter

(57) **Zusammenfassung**

Bei einem Getriebe mit einem stufenlos regelbaren Leistungszweig mit einem Umschlingungsgetriebe als Variator (3) und einem Summierungsgetriebe (4) mit kraftschlüssigen Lamellenkupplungen (K1, K2, K3, K4) wird trotz einer geringen Anzahl von Fahrbereichen die Größe des Variators (3) dadurch reduziert, daß seine Primärkegelscheiben (12) auf einer Vorgelegewelle (5) angeordnet sind und über eine Eingangskonstante (17, 18) ins Schnelle angetrieben werden. Ferner werden mit einer großen Anzahl gleichbleibender Teile Ausführungen mit drei und vier Fahrbereichen ermöglicht, indem bei der Version mit drei Fahrbereichen der Variator (3) kurzzeitig überbrückt wird und in diesem Zustand ohne Kraftunterbrechung in seinen Ausgangszustand zurückgefahren wird.

## Beschreibung

Die Erfindung betrifft ein Getriebe mit den Merkmalen nach dem Oberbegriff von Anspruch 1.

Bei Getrieben mit einem Leistungszweig mit stufenlos regelbarer Drehzahl und einem Leistungszweig mit konstanter Drehzahl summiert ein Summierungsgetriebe die Leistung der beiden Leistungszweige und leitet sie gegebenenfalls über ein mechanisches Schaltgetriebe zu einem Fahrzeugantrieb.

Es sind zahlreiche Getriebe bekannt, bei denen ein Hydrostat mit einer Pumpe und einem Hydromotor den stufenlos regelbaren Leistungszweig bildet. Ist der mechanische Leistungszweig durch eine Kupplung unterbrochen, überträgt der hydraulische Leistungszweig die gesamte Leistung. Ist der Hydrostat auf Null gestellt, überträgt der mechanische Leistungszweig die gesamte Leistung. Zwischen diesen beiden Betriebspunkten wird die Leistungsaufteilung von der Ansteuerung des Hydrostaten bestimmt und somit die Abtriebsdrehzahl stufenlos geregelt. Derartige Getriebe werden unter anderem für Traktoren und Arbeitsmaschinen verwendet.

Bei anderen Getrieben der eingangs genannten Art bildet ein mechanisch stufenloses Getriebe, Z. B. ein Variator als Umschlingungsgetriebe, den stufenlos regelbaren Leistungszweig. Da diese Getriebe nicht auf eine Drehzahl Null verstellt werden können, eignen sie sich nur mit einer Anfahrkupplung für einen Fahrantrieb mit Brennkraftmaschinen.

Grundsätzlich gilt für beide Getriebearten, daß der Aufwand und die Größe des stufenlos regelbaren Leistungszweigs um so größer ist, je höher das zu übertragende Drehmoment und je größer der Wandlungsbereich ist. Um den Variator klein zu halten, wird der Gesamtübersetzungsbereich des Getriebes durch schaltbare Getriebestufen in mehrere Vorwärts- und Rückwärtsfahrbereiche unterteilt. In jedem Fahrbereich durchfährt der Variator seinen gesamten Verstellbereich vom Maximum zum Minimum oder umgekehrt. In den Endstellungen erreichen die zu schaltenden Schaltelemente des Getriebes Synchrondrehzahl, so daß ruckfrei und ohne Lastunterbrechung geschaltet werden kann.

Der Schaltungsaufwand wächst jedoch mit der Anzahl der Schaltstufen, da hiermit auch die Anzahl der Schaltelemente zunimmt. In der Regel verwendet man kraftschlüssige Schaltelemente in Form von nassen Lamellenkupplungen oder - bremsen, die von hydraulischen Betätigungseinrichtungen mit Kolben und zahlreichen Dichtelementen geschaltet werden. Ihre Leerlaufverluste sind relativ groß, weil das Öl zwischen den Lamellen Schleppmomente verursacht.

Der Erfindung liegt die Aufgabe zugrunde, ein Getriebe zu schaffen, das eine stufenlose Fahrleistung über mehrere Fahrbereiche aufweist, wobei die Anzahl der Fahrbereiche klein gehalten werden soll, ohne daß der stufenlos regelbare Leistungszweig zu groß oder überlastet wird.

Sie wird gemäß der Erfindung durch die Merkmale des Anspruchs 1 gelöst.

Durch die Erfindung wird ein mechanisches, leistungsverzweigtes Getriebe mit mehreren, vorzugsweise mit vier Vorwärtsfahrbereichen geschaffen. Dadurch kann der Variator klein gehalten werden. Für die Schaltung der vier Vorwärtsfahrbereiche und zwei Rückwärtsfahrbereiche sind nur vier Planetensätze, vier Kupplungen und zwei Bremsen erforderlich. Für drei Vorwärtsfahrbereiche reduziert sich die Anzahl der Planetensätze auf drei bei sonst weitgehend gleichen Bauteilen. Somit können mit dem gleichen Getriebekonzept Anwendungen mit geringeren und höheren Anforderungen an Fahrbereiche abgedeckt werden.

Ferner wirkt sich günstig aus, daß der Variator über eine Eingangsgetriebestufe mit einer konstanten Übersetzung ins Schnelle angetrieben wird. Dadurch wird der Variator bei gleicher Leistung nur durch ein relativ kleines Drehmoment belastet, und er kann entsprechend klein dimensioniert werden. Allerdings muß die Übersetzungsstufe in der Gesamtübersetzung berücksichtigt werden; aber in den nachgeschalteten Zahnradstufen sind hohe Drehmomente mit gutem Wirkungsgrad und geringem Verschleiß leichter zu beherrschen als beim Variator.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt und weitere Vorteile werden im Zusammenhang mit den Figuren erläutert.

Es zeigt:

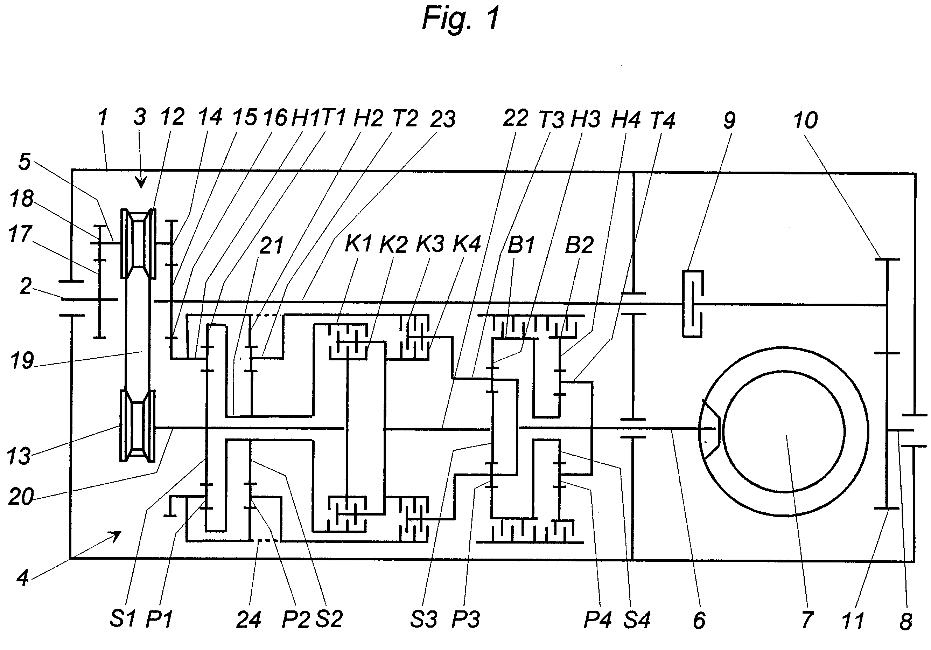

Fig. 1 schematisch ein stufenloses Getriebe mit einem Umschlingungsgetriebe als Variator in einem von zwei Leistungszweigen und
Fig. 2 tabellarisch eine Schaltlogik.

Eine nicht dargestellte Antriebsmaschine treibt das stufenlose Getriebe über eine Antriebswelle 2 an, die in einem Gehäuse 1 des Getriebes gelagert ist und auf der ein Zahnrad 17 fest montiert ist, das mit einem Zahnrad 18 eine Eingangsstufe mit einer konstanten Übersetzung ins Schnelle bildet, kurz Eingangskonstante genannt.

Das Zahnrad 18 treibt ein Primärkegelscheibenpaar 12 eines Variators 3 an, das auf einer Vorgelegewelle 5 angeordnet ist und über ein Umschlingungsorgan 19, z. B. eine Kette, einen Riemen oder ein Schubgliederband, mit einem Sekundärkegelscheibenpaar 13 in Wirkverbindung steht. Die Übersetzung des Variators 3 ist stufenlos verstellbar, indem die Primärkegelscheiben 12 und Sekundärkegelscheiben 13 entsprechend verstellt werden.

Hierzu dienen in der Regel hydraulische Stellorgane, die elektronisch von einem Mikroprozessor angesteuert werden, und zwar in Abhängigkeit von Motor-, Fahrzeug oder Betriebsparametern unter Verwendung von Kenngrößen, Kennfeldern oder Fuzzyregeln. Einzelheiten sind hier nicht dargestellt. Der Variator 3 ist der Hauptbestandteil des stufenlos regelbaren Leistungszweigs.

Auf der Vorgelegewelle 5 sitzt ein weiteres Zahnrad 14, das über ein Zahnrad 15 auf einer Nebenantriebswelle 23, die koaxial zur Antriebswelle 2 angeordnet ist, ein Zahnrad 16 am Eingang eines Summierungsgetriebes 4 antreibt.

Das Summierungsgetriebe 4 hat vier Planetensätze mit Sonnenrädern S, Planeten P, Hohlrädern H und Planetenträgern T, auf den die Planeten P drehbar gelagert sind. Die Planeten P kämmen mit den Sonnenrädern S und den Hohlrädern H. Je nach dem, zu welchem Planetensatz die einzelnen Getriebeteile gehören, sind sie zusätzlich zu den Buchstaben mit einer entsprechenden Kennziffer gekennzeichnet, z. B. S1 steht für das Sonnenrad des ersten Planetensatzes.

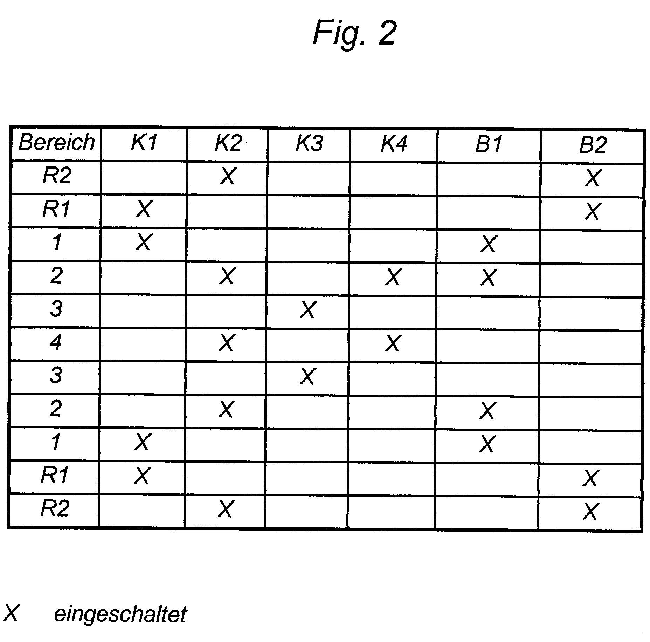

Das Summierungsgetriebe 4 wird mittels vier Kupplungen K1, K2, K3, K4 und zweier Bremsen B1 und B2 in vier Vorwärtsfahrbereiche und zwei Rückwärtsfahrbereiche R1, R2 geschaltet. Die schematische Schaltlogik nach Fig. 2 gibt an, welches Schaltelement in welchem Fahrbereich geschlossen ist. Die nicht mit einem Kreuz gekennzeichneten Schaltelemente sind geöffnet. Obwohl zwischen den Fahrbereichen im synchronen Zustand geschaltet wird, d. h., die zu schaltenden Schaltungselemente haben die gleiche Drehzahl erreicht, werden die Schaltelemente überschneidend geschlossen bzw. geöffnet.

Das Zahnrad 16 treibt den Planetenträger T1 und das Hohlrad H2 mit einer konstanten Drehzahl an, während das Sekundärkegelscheibenpaar 13 über eine Sekundärwelle 20 das Sonnenrad S1 mit einer variablen Drehzahl antreibt. Die summierte Drehzahl wird im ersten Fahrbereich über das Hohlrad H3 und die Kupplung K1 sowie eine Zwischenwelle 22 an das Sonnenrad S3 des dritten Planetensatzes weitergeleitet. Das Sonnenrad S3 treibt über die Planeten P3 den Planetenträger T3 an, der mit einer Abtriebswelle 6 verbunden ist.

Wenn die Bremse B1, die mit dem Hohlrad H3 und dem Sonnenrad S4 verbunden ist, geschlossen ist, ist der erste Vorwärtsfahrbereich geschaltet; wenn die Bremse B2, die mit dem Hohlrad H4 verbunden ist, geschlossen ist, ist der erste Rückwärtsfahrbereich R1 geschaltet.

Im zweiten Fahrbereich ist die Kupplung K2 geschlossen. Die variable Drehzahl wird direkt über die Kupplung K2 und die Zwischenwelle 22 an das Sonnenrad S3 weitergeleitet. Die Bremsen B1 und B2 wirken wie im ersten Fahrbereich und bestimmen die Vorwärts- und Rückwärtsfahrrichtung.

Im dritten Fahrbereich verbindet die Kupplung K3 den Planetenträger T2 mit dem Planetenträger T3, der mit der Abtriebswelle 6 verbunden ist. Es ist nur ein Vorwärtsfahrbereich möglich, der von der durch den ersten und zweiten Planetensatz summierte Drehzahl bestimmt wird.

Im vierten Fahrbereich, der ebenfalls nur in Vorwärtsfahrrichtung möglich ist, sind die Kupplungen K2 und K4 geschlossen, so daß der Planetenträger T3 unmittelbar von dem Sekundärkegelscheibenpaar 13 angetrieben wird.

Eine vereinfachte Version kann mit weitgehend gleichen Bauteilen dadurch realisiert werden, daß der zweite Planetensatz mit dem Sonnenrad S2, den Planeten P2, dem Planetenträger T2 und dem Hohlrad H2 entfällt und statt dessen der Planetenträger T1 durch eine gestrichelt eingezeichnete Verbindung 24 an der Kupplung K3 angeschlossen ist. Anstelle des dritten Vorwärtsfahrbereichs wird nun bei geschlossener Kupplung K3 der Planetenträger T3 mit konstanter Drehzahl angetrieben. Während dieser Zeit wird der Variator 3 in seinen Ausgangszustand zurückgefahren und somit für den vierten Fahrbereich vorbereitet, in den dann ohne Zugkraftunterbrechung geschaltet werden kann, indem die Kupplungen K2 und K4 geschlossen und die Kupplung K3 geöffnet wird. Eine Verflachung der Beschleunigungskurve kann durch einen Eingriff in die Motorreglung ausgeglichen werden.

Eine Kupplung 9 kann die Nebenantriebswelle 23 über eine Untersetzungsstufe mit Zahnrädern 10, 11 mit einer motordrehzahlabhängigen Zapfwelle 8 verbinden.

### Bezugszeichen

- 1: Gehäuse
- 2: Antriebswelle
- 3: Variator
- 4: Summierungsgetriebe
- 5: Vorgelegewelle
- 6: Abtriebswelle
- 7: Achsdifferential
- 8: Zapfwelle
- 9: Kupplung
- 10: Zahnrad
- 11: Zahnrad
- 12: Primärkegelscheiben
- 13: Sekundärkegelscheiben
- 14 - 18: Zahnrad
- 19: Umschlingungsorgan
- 20: Sekundärwelle
- 21: Koppelwelle
- 22: Zwischenwelle
- 23: Nebenantriebswelle
- 24: Verbindung
- B1: Bremse
- B2: Bremse
- H1 - H4: Hohlrad
- P1 - P4: Planet
- S1 - S4: Sonnenrad
- T1 - T4: Planetenträger
- K1 - K4: Kupplung

## Patentansprüche

1. Getriebe mit einem stufenlos regelbaren Leistungszweig und einem Summierungsgetriebe (4) mit hydraulisch betätigten, kraftschlüssigen Schaltelementen (K1, K2, K3, K4), dadurch **gekennzeichnet,** daß ein Primärkegelscheibenpaar (12) eines Variators (3) auf einer Vorgelegewelle (5) angeordnet ist und über eine ins Schnelle übersetzende Eingangskonstante (17, 18) von einer Antriebswelle (2) angetrieben wird, wobei ein Sekundärkegelscheibenpaar (13), das von dem Primärkegelscheibenpaar (12) über ein Umschlingungsorgan (19) angetrieben wird, mit einem Sonnenrad (S1) eines ersten Planetensatzes des Summierungsgetriebes (4) verbunden ist, während die Antriebswelle (2) mit einem Planetenträger (T1) des ersten Planetensatzes in trieblicher Verbindung steht.

2. Stufenloses Getriebe nach Anspruch 1, dadurch **gekennzeichnet,** daß das Summierungsgetriebe aus vier Planetensätzen besteht mit folgenden Merkmalen:
- Die Antriebswelle (2) ist mit einem Hohlrad (H2) des zweiten Planetensatzes trieblich verbunden, mit dem Planeten (P2) des zweiten Planetensatzes kämmen,
- ein Sonnenrad (S2) des zweiten Planetensatzes, das mit den Planeten (P2) kämmt, und ein Hohlrad (H1) des ersten Planetensatzes sind mit einer Koppelwelle (21) verbunden, die über eine Kupplung (K1) und eine Zwischenwelle (22) mit einem Sonnenrad (S3) eines dritten Planetensatzes gekuppelt werden kann,
- das Sonnenrad (S1), das über eine Sekundärwelle (20) mit dem Sekundärkegelscheibenpaar (13) gekoppelt ist, kann über eine Kupplung (K2) mit dem Sonnenrad (S3) und in Verbindung mit einer Kupplung (K4) zusätzlich mit einem Planetenträger (T3) des dritten Planetensatzes verbunden werden, der über eine Kupplung (K3) mit einem Planetenträger (T2) kuppelbar ist,
- über die Kupplung (K3) kann der Planetenträger (T2) mit dem Planetenträger (T3) verbunden werden,
- die Planetenträger (T3, T4) des dritten und vierten Planetensatzes sind mit einer Abtriebswelle (6) und
- ein Hohlrad (H3) des dritten Planetensatzes ist mit einem Sonnenrad (S4) des vierten Planetensatzes gekoppelt,
- eine Bremse (B1) kann das Hohlrad (H3) zusammen mit dem Sonnenrad (S4) festhalten, während eine Bremse (B2) ein Hohlrad (H4) des vierten Planetensatzes festhalten kann.

3. Stufenloses Getriebe nach Anspruch 2, dadurch **gekennzeichnet,** daß der zweite Planetensatz (S2, P2, T2, H2) entfällt und der Planetenträger (T1) des ersten Planetensatzes an der Kupplung (K3) angeschlossen ist.

4. Stufenloses Getriebe nach einem der vorangehenden Ansprüche, dadurch **gekennzeichnet,** daß die Antriebswelle (2) über die Vorgelegewelle (5) und eine Untersetzungsstufe, die aus Zahnrädern (10, 11) besteht, eine Zapfwelle (8) antreibt die über eine Kupplung (9) zu- und abschaltbar ist.

5. Verfahren zum Betrieb eines Getriebes nach Anspruch 3, dadurch **gekennzeichnet,** daß der Variator (3) am Ende eines zweiten Fahrbereichs in seinen Ausgangszustand zurückgefahren wird, während die Kupplung (K3) geschlossen und die Kupplung (K2) geöffnet ist.

6. Verfahren zum Betrieb eines Getriebes nach Anspruch 5, dadurch **gekennzeichnet,** daß die während der Rücklaufzeit des Variators (3) verflachte Beschleunigungsrate durch eine Anpassung in der Motorreglung ausgeglichen wird.

7. Verfahren zum Betrieb eines Getriebes nach Anspruch 5 oder 6, dadurch **gekennzeichnet,** daß die Schaltungen elektronisch und vollautomatisch von einer Mikroprozessorsteuerung durchgeführt werden, und zwar abhängig von vorgegebenen Sollwerten, Kennfeldern, Fuzzyregeln, Anriebs- Fahrzeug- oder Betriebsparametern.
